Europäisches Patentamt

(19) European Patent Office

Office européen des brevets

(11) Numéro de publication : **0 189 337**
**B1**

(12) **FASCICULE DE BREVET EUROPÉEN**

(45) Date de publication du fascicule du brevet :
**05.04.89**

(51) Int. Cl.⁴ : **F 16 C   1/28**

(21) Numéro de dépôt : **86400026.0**

(22) Date de dépôt : **08.01.86**

(54) **Dispositif flexible de télécommande à billes.**

(30) Priorité : **16.01.85 FR 8500590**

(43) Date de publication de la demande :
**30.07.86 Bulletin 86/31**

(45) Mention de la délivrance du brevet :
**05.04.89 Bulletin 89/14**

(84) Etats contractants désignés :
**BE CH DE FR GB IT LI LU NL SE**

(56) Documents cités :
**DE--A-- 1 813 800**
**DE--A-- 2 003 465**
**US--A-- 3 287 990**
**US--A-- 3 831 249**
**US--A-- 4 133 222**

(73) Titulaire : **CONSTRUCTIONS BREVETEES D'ALFORT-VILLE**
**189/191 rue Paul Vaillant Couturier**
**F-94141 Alfortville (FR)**

(72) Inventeur : **Pommey, Michel**
**41 avenue Danièle Casanova**
**F-94400 Vitry sur Seine (FR)**

(74) Mandataire : **Hasenrader, Hubert et al**
**Cabinet BEAU DE LOMENIE 55, rue d'Amsterdam**
**F-75008 Paris (FR)**

EP 0 189 337 B1

Jouve, 18, rue St-Denis, 75001 Paris, France

## Description

L'invention concerne un dispositif de transmission d'efforts de traction et de compression du type comportant une gaine qui contient une lame flexible de transmission susceptible de se déplacer longitudinalement par rapport à la gaine et disposée sensiblement dans l'axe de la gaine entre deux lignes d'organes de roulement qui sont retenus par des cages sous forme de bandes flexibles munies d'ouvertures embouties formant une paroi de retenue pour les organes de roulement, lesquels peuvent rouler entre la lame de transmission d'une part et deux rails de roulement flexibles, opposés, appliqués contre la face interne de la gaine.

Pour permettre à ce type de transmission de supporter des courbures importantes, il est connu que les rails de roulement soient fixés à leur extrémité dans un dispositif d'ancrage différentiel, du type comportant deux tubes coaxiaux et concentriques munis de lumières hélicoïdales inversées, les tubes étant disposés l'un dans l'autre de manière que leurs lumières superposées se croisent en formant des ouvertures de blocage pour des protubérances liées aux rails de roulement. Un tel dispositif d'ancrage est connu par le brevet FR-A-1 587 503 dont on supposera ici connu l'enseignement.

Ce dispositif a pu donner satisfaction dans un certain nombre de cas, mais des essais répétés montrent que cette transmission coince au bout d'un nombre de cycles de fonctionnement très insuffisant par rapport au seuil de sécurité exigé pour équiper des appareils tels que les engins aéronautiques.

Le but de l'invention est de proposer une commande à billes exempte du défaut précédent.

L'invention repose sur la découverte, au terme de longs essais, que le coincement évoqué ci-dessus provenait essentiellement d'un défaut d'alignement des rails dans la chambre d'ancrage et qu'on pouvait remédier de manière surprenante à ce défaut en prévoyant, au lieu d'une fixation unique dans les ouvertures de blocage, une fixation multiple exerçant une fonction de guidage et d'alignement.

Ainsi, la présente invention prévoit que chacun des deux tubes comporte au moins deux paires de lumières hélicoïdales parallèles et décalées longitudinalement, deux lumières parallèles d'un côté du tube s'enroulant dans un même sens tandis que celles de l'autre côté du tube s'enroulent dans l'autre sens. Ainsi, non seulement la fixation des rails au dispositif d'ancrage se trouve mieux assurée, mais encore les deux ouvertures alignées dans lesquelles passent les protubérances d'ancrage des rails exercent sur ceux-ci la double fonction de guidage et d'alignement longitudinal précitée, contribuant à la sécurité de fonctionnement de la transmission.

Avantageusement les protubérances sont liées aux rails par rivetage et elles présentent à leur base une embase d'entretoisement entre les rails et le tube intérieur du dispositif d'ancrage, destinée à assurer un guidage encore plus parfait du rail.

De façon connue en soi, le dispositif d'ancrage est disposé dans deux manchons se vissant l'un sur l'autre. Pour encore accroître la sécurité de la fixation, il est prévu un blocage en fin de vissage, avantageusement réalisé par la coopération à force de deux reliefs complémentaires prévus sur les manchons.

Pour des courbures prononcées de la transmission, celle-ci pourrait être sujette à une augmentation très sensible de la résistance au déplacement de la lame de transmission. Il est donc avantageux de munir, ainsi qu'il est connu en soi, les bandes flexibles formant les cages de moyens d'écartement entre les bandes et les rails.

Ces moyens d'écartement, qui sont avantageusement des saillies obtenues par déformation lors de l'emboutissage des bandes métalliques formant les cages de roulement, permettent de réduire le contact entre la bande de roulement et le rail de roulement (contact freinant le déplacement de la bande et donc de la lame de transmission) à une surface sensiblement ponctuelle.

L'ensemble de toutes ces mesures permet d'obtenir une transmission à billes parfaitement fiable en dépit de conditions d'utilisation sévères, telles que de fortes courbures imposées.

D'autres avantages et caractéristiques de l'invention ressortiront de la description ci-après d'un mode préféré, mais non limitatif, de réalisation de l'invention. Il sera fait référence aux dessins annexés sur lesquels :

la figure 1 est une coupe longitudinale d'une cage conforme à l'invention,

la figure 2 est une coupe transversale de l'ensemble du dispositif de l'invention,

la figure 3 est une coupe du dispositif d'ancrage de la transmission conforme à l'invention,

la figure 4 montre un des cylindres encochés pour l'amarrage des rails de roulement conformes à l'invention,

la figure 5 montre en perspective le dispositif de blocage des manchons du dispositif d'ancrage,

la figure 6 montre le détail VI de la figure 3,

la figure 7 est une coupe VII-VII de la figure 6.

Le dispositif de transmission comprend une gaine 1 à l'intérieur de laquelle sont disposés deux rails de roulement 2, flexibles, pour deux rangées de billes 3 qui roulent sur une lame flexible 4 destinée à la transmission des forces.

Les billes 3 sont maintenues par des cages à billes formées de bandes métalliques 5 percées à intervalles réguliers (par exemple 1 cm) d'ouvertures 6 produites par découpage-emboutissage de manière à créer au bord des ouvertures une cuvette emboutie 7 fermée par un bord relevé 8 qui retient la bille.

Conformément à l'invention, on forme sur les bandes métalliques 5 pendant l'opération d'emboutissage des bosses 9, à mi-distance entre les ouvertures 6 et sur les deux bords de chaque bande 5. Ces bosses 9 permettent de maintenir les bandes 5 globalement écartées des rails 2, même lorsque le dispositif de transmission est fortement courbé, en maintenant tout au plus des contacts ponctuels entre les bandes 5 et les rails de roulement 2.

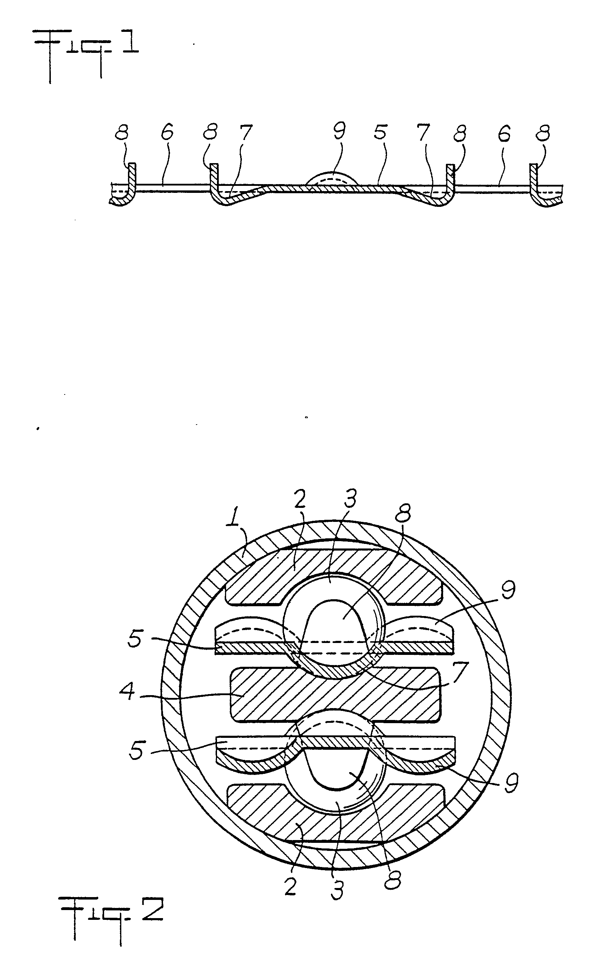

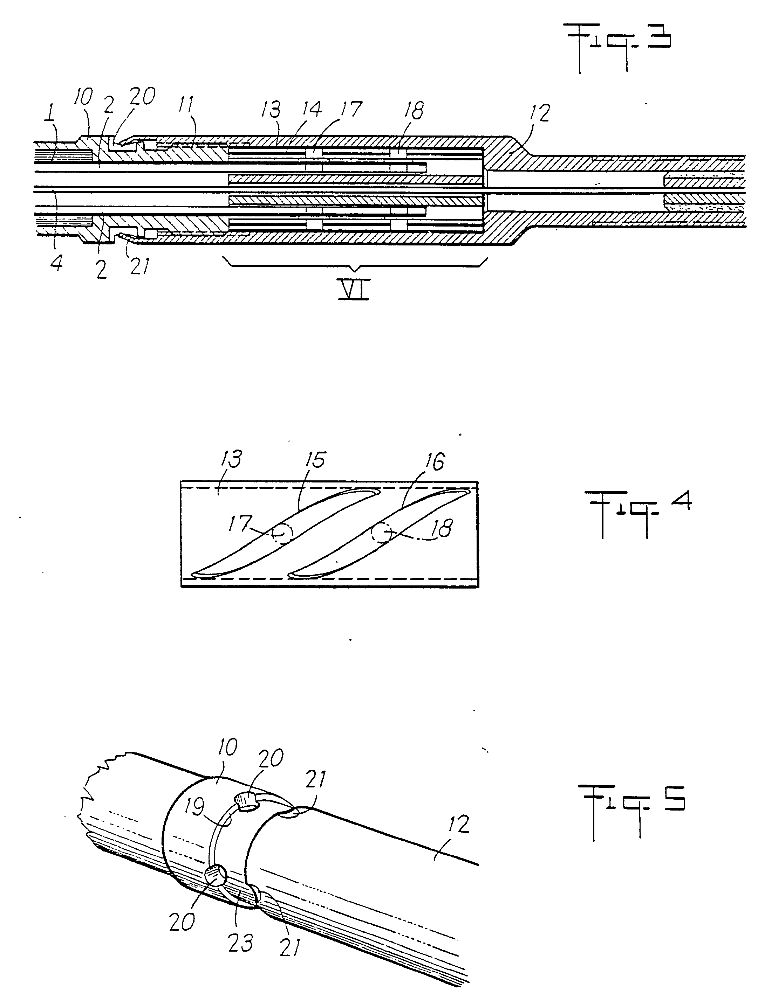

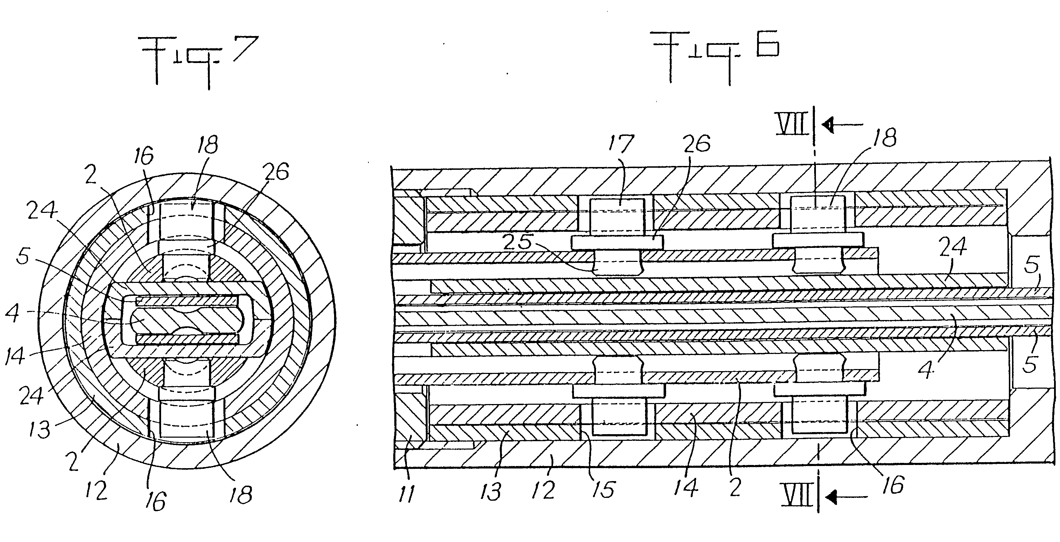

La transmission de l'invention est fixée à ses extrémités dans un manchon d'amarrage 10 enserrant la gaine 1 (fig. 3). L'extrémité 11 du manchon 10 est filetée pour y visser le manchon principal 12 lui-même fileté pour s'adapter à une tige de commande ou à un élément commandé non représenté, les efforts étant transmis par la lame 4.

Les manchons 11 et 12 délimitent une chambre d'ancrage dans laquelle sont disposés avec un léger jeu deux tubes coaxiaux 13 et 14 munis de rainures hélicoïdales.

Chaque tube comporte deux paires de rainures 15 et 16 parallèles et décalées longitudinalement. L'angle d'inclinaison de l'hélice est avantageusement de 30 à 35°, l'ouverture angulaire des rainures voisine de 100°. Deux rainures parallèles d'un côté d'un tube s'enroulent dans le même sens, tandis que celles de l'autre côté du tube s'enroulent dans l'autre sens.

Les tubes sont disposés l'un dans l'autre de manière que des rainures superposées se croisent en formant des ouvertures en losange.

Des tétons 17 et 18 fixés à l'extrémité des rails 2 passent dans les ouvertures en losange ainsi formées, ce qui réalise l'amarrage des rails par rapport aux manchons, cet amarrage étant susceptible par la rotation des tubes 13, 14 de permettre à l'extrémité des rails 2 un déplacement différentiel, fonction de la courbe adoptée par le dispositif de transmission.

Les figures 6 et 7 montrent plus en détail l'agencement de la partie désignée par l'accolade VI sur la figure 3. On y voit que la lame 4 et les cages 5 passent à l'intérieur de deux entretoises 24 en 8 se faisant face pour ménager un canal rectangulaire. Ces entretoises 24 sont maintenues en butée axiale à l'intérieur de la chambre d'ancrage.

Les tétons 17 et 18 des rails 2 comportent une partie de rivetage 25 destinée à leur ancrage dans le rail, une embase sensiblement parallélépipédique 26, et la partie protubérante jouant le rôle de téton proprement dit. L'embase est destinée à assurer un parfait calage des différents éléments entre eux. A cet effet, l'embase a une longueur supérieure à la longueur de l'ouverture formée par le croisement des rainures 15 et 16, et une largeur suffisante pour venir porter, par l'extrémité de ses arêtes latérales supérieures, contre la race interne du tube intérieur 14 (cf. fig. 7). De la sorte, les rails 2 sont maintenus contre les entretoises 24.

Afin d'assurer que les manchons 10, 12 ne se dévissent pas une fois montés, un dispositif d'arrêt est prévu. La surface du manchon 10 comporte un épaulement 19 contre lequel le manchon 12 vient buter. Des trous 20 sont percés en avant de l'épaulement 19, mordant même légèrement sur l'épaulement. Le bord correspondant du manchon 12 est légèrement enfoncé par endroits pour former des dépressions qui, tout en permettant le passage à force dans la zone intermédiaire 23 du manchon 10, vont se bloquer en fin de vissage dans les trous 20. On peut prévoir, par exemple quatre trous 20 et quatre dépressions correspondantes 21.

Ainsi selon l'invention est obtenu un dispositif de télécommande à billes parfaitement sûr, précieux dans des conditions d'utilisation où toute défaillance doit être absolument proscrite (aéronautique notamment). Il est en particulier exclu, grâce aux caractéristiques de l'invention, qu'une bille puisse sortir de son logement dans la cage (par exemple en cas de forte courbure) et bloque la commande.

**Revendications**

1. Dispositif de transmission d'efforts de traction et de compression du type comportant une gaine (1) qui contient une lame (4) flexible de transmission susceptible de se déplacer longitudinalement par rapport à la gaine (1) et disposée sensiblement dans l'axe de la gaine entre deux lignes d'organes de roulement (3) qui sont retenus par des cages sous forme de bandes flexibles (5) munies d'ouvertures (6) embouties formant une paroi de retenue (8) pour les organes de roulement (3), lesquels peuvent rouler entre la lame de transmission (4) d'une part et deux rails (2) de roulement flexibles, opposés, appliqués contre la face interne de la gaine (1), les rails de roulement (2) étant fixés à leur extrémité dans un dispositif d'ancrage différentiel (13-18), du type comportant deux tubes coaxiaux et concentriques (13, 14) munis de lumières hélicoïdales (15, 16) inversées, les tubes (13, 14) étant disposés l'un dans l'autre de manière que leurs lumières (15, 16) superposées se croisent en formant des ouvertures de blocage pour des protubérances (17, 18) liées aux rails de roulement (2), caractérisé en ce que chacun des deux tubes (13, 14) comporte au moins deux paires de lumières (15, 16) hélicoïdales parallèles et décalées longitudinalement, deux lumières parallèles d'un côté du tube s'enroulant dans un même sens, tandis que celles de l'autre côté du tube s'enroulent dans l'autre sens.

2. Dispositif selon la revendication 1, caractérisé en ce que les bandes flexibles (5) formant les cages sont munies, entre les ouvertures (6), de moyens d'écartement (9) entre les bandes (5) et les rails (2).

3. Dispositif selon la revendication 2, caractérisé en ce que les moyens d'écartement sont des saillies (9).

4. Dispositif selon la revendication 3, caractérisé en ce que les saillies (9) sont obtenues par déformation des bandes.

5. Dispositif selon la revendication 1, dans lequel le dispositif d'ancrage (13-18) est disposé dans deux manchons (10, 12) se vissant l'un sur l'autre, caractérisé en ce qu'un dispositif de blocage (20, 21) est prévu en fin de vissage.

6. Dispositif selon la revendication 5, caractérisé en ce que le dispositif de blocage est constitué par la coopération à force de deux reliefs complémentaires (20, 21) prévus sur les manchons (10, 12).

7. Dispositif selon la revendication 1, caractérisé en ce que les protubérances (17, 18) sont liées aux rails par rivetage.

8. Dispositif selon la revendication 1, caractérisé en ce que les protubérances (17, 18) présentent à leur base une embase (26) d'entretoisement entre les rails et le tube intérieur (14) du dispositif d'ancrage différentiel.

## Claims

1. Device for transmitting traction and compressive forces, of the type comprising a sheath (1) which contains a flexible, flat, motion transmitting member (4) capable of moving longitudinally with respect to the sheath (1) and disposed substantially in the axis of the sheath between two lines of rolling members (3) which are retained by cages in the form of flexible strips (5) having openings (6) stamped out therein forming a retaining wall (8) for the rolling members (3), which may roll between the motion transmitting member (4) on the one hand and two opposite flexible roller rails (2) applied against the inner face of the sheath (1), said rails (2) being fixed at their end in a differential anchoring device (13-18), of the type comprising two coaxial and concentric tubes (13, 14) provided with reversed helicoidal slots (15, 16) the tubes (13, 14) being placed one inside the other so that their superposed slots (15, 16) cross while forming openings for blocking lugs (17, 18) connected to the rails (2), characterized in that each of the two tubes (13, 14) comprises at least two pairs of parallel, longitudinally offset, helicoidal slots (15, 16) two parallel slots on one side of the tube winding in one direction, whereas those on the other side of the tube wind in the other direction.

2. Device according to claim 1, characterized in that the flexible strips (5) forming the cages are provided, between the openings (6), with spacer means (9) between the strips (5) and the rails (2).

3. Device according to claim 2, characterized in that the spacer means are projections (9).

4. Device according to claim 3, characterized in that the projections (9) are obtained by deforming the strips.

5. Device according to claim 1, in which the anchoring device (13, 18) is disposed in two sleeves (10, 12) which screw on each other, characterized in that a blocking device (20, 21) is provided at the end of screwing.

6. Device according to claim 5, characterized in that the blocking device is constituted by the cooperation by force of two complementary elements (20, 21) in relief provided on the sleeves (10, 12).

7. Device according to claim 1, characterized in that the lugs (17, 18) are connected to the rails by riveting.

8. Device according to claim 1, characterized in that the bottom of the lugs (17, 18) presents a base (26) for bracing between the rails and the inner tube (14) of the differential anchoring device.

## Patentansprüche

1. Vorrichtung zur Übertragung von Zug- und Druckkräften mit einer Hülle (1), die ein flexibles Übertragungsband (4) enthält, das längs der Hülle (1) bewegbar und im wesentlichen in der Hüllenachse zwischen zwei Laufwerkreihen (3) angeordnet ist, die festgehalten werden durch Kugelkäfige in Form von elastischen Bändern (5) mit vertieften Öffnungen (6) und eine Haltewand (8) für die Laufwerke (3) bilden, die sich zwischen dem Übertragungsband (4) einerseits und zwei gegenüberliegenden, an der Innenwand der Hülle (1) anliegenden flexiblen Laufschienen (2) bewegen können, wobei die Laufschienen (2) an ihrem Ende in einer Differentialklemmvorrichtung (13-18) befestigt sind, die zwei koaxiale und konzentrische Röhren (13, 14) mit gegenläufig spiralförmigen Schlitzen (15, 16) aufweist, wobei die Röhren (13, 14) ineinander angeordnet sind, sodaß sich ihre übereinanderliegenden Schlitze (15, 16) kreuzen und Sperröffnungen für mit den Laufschienen (2) verbundene Ausstülpungen (17, 18) bilden, dadurch gekennzeichnet, daß jede der beiden Röhren (13, 14) mindestens zwei Paar zueinander parallele und der Länge nach zueinander versetzte spiralförmige Schlitze (15, 16) aufweist, wobei zwei parallele Schlitze auf einer Seite der Röhre in der gleichen Richtung verlaufen, während diejenigen auf der anderen Seite der Röhre in der anderen Richtung verlaufen.

2. Vorrichtung nach Anspruch 1, dadurch gekennzeichnet, daß die die Kugelkäfige bildenden flexiblen Bänder (5) zwischen den Öffnungen (6) mit Abstandsmitteln (9) zwischen den Bändern (5) und den Schienen (2) versehen sind.

3. Vorrichtung nach Anspruch 2, dadurch gekennzeichnet, daß die Abstandsmittel Überhänge (9) sind.

4. Vorrichtung nach Anspruch 3, dadurch gekennzeichnet, daß die Überhänge (9) durch Verformung der Bänder erhalten werden.

5. Vorrichtung nach Anspruch 1, in der die Klemmvorrichtung (13-18) in zwei aneinandergeschraubten Muffen (10, 12) angeordnet ist, dadurch gekennzeichnet, daß eine Sperrvorrichtung am Ende der Schraubverbindung vorgesehen ist.

6. Vorrichtung nach Anspruch 5, dadurch gekennzeichnet, daß die Sperrvorrichtung durch die Wirkung von zwei auf den Muffen (10, 12) vorgesehenen zusätzlichen Erhöhungen (20, 21) gebildet wird.

7. Vorrichtung nach Anspruch 1, dadurch gekennzeichnet, daß die Ausstülpungen (17, 18) mit den Schienen durch Nieten verbunden sind.

8. Vorrichtung nach Anspruch 1, dadurch gekennzeichnet, daß die Ausstülpungen (17, 18) an ihrem Boden einen Verstrebungsansatz zwischen den Schienen und der inneren Röhre (14) der Differentialklemmvorrichtung aufweisen.

Fig. 1

Fig. 2

1

Fig. 3

Fig. 4

Fig. 5

Fig. 6

Fig. 7